# EUROPEAN PATENT APPLICATION

(11) **EP 1 100 176 A1**
(43) Date of publication of application: **16.05.2001**
(21) Application number: 00124143.9
(22) Date of filing: 07.11.2000
(51) Int. Cl.: H02K 1/27, H02K 15/03

(54) **Permanent-magnet electric motor**

(30) Priority: 10.11.1999 IT TO990965
(71) Applicant: BITRON S.p.A., 10042 Nichelino (Torino) (IT)
(72) Inventor: Fabio, Arpino, 20133 Milano (IT); Flavio, Maggi, 20132 Milano (IT); Francesco, Galluzzi, 24040 Chignolo d'Isola, (Bergamo) (IT); Pietro, Defilippis, 20052 Monza, (Milano) (IT)
(74) Representative: Lotti, Giorgio

(57) **Abstract**

A permanent-magnet electric motor with a driving shaft (10), a plurality of permanent magnets (11) located around the driving shaft (10) itself and an assembly structure being angle-coupled to the driving shaft (10) in order to assemble the magnets (11) between them and with the driving shaft (10) itself; the assembly structure presenting a plurality of sectors (13) of ferromagnetic material placed between the permanent magnets (11), two flanges (24) axially located on the opposite sides of the sectors (13) themselves, provided with respective metal supports (31) and a pin (26) for each sector (13) placed through the sector (13) itself an engaged inside respective holes made into the two supports (31); the assembly support being provided with an insulating portion, which is made of electrically insulating material and which covers the supports (31) completely in order to achieve the electric separation of the pins (26) and the sectors (13) from the supports (31) themselves.

## Description

The present invention relates to a permanent-magnet electric motor.

The electric motors according to the present invention can be advantageously applied in the field of electric household appliances, so that the following description will explicitly refer to it, yet keeping its generalities.

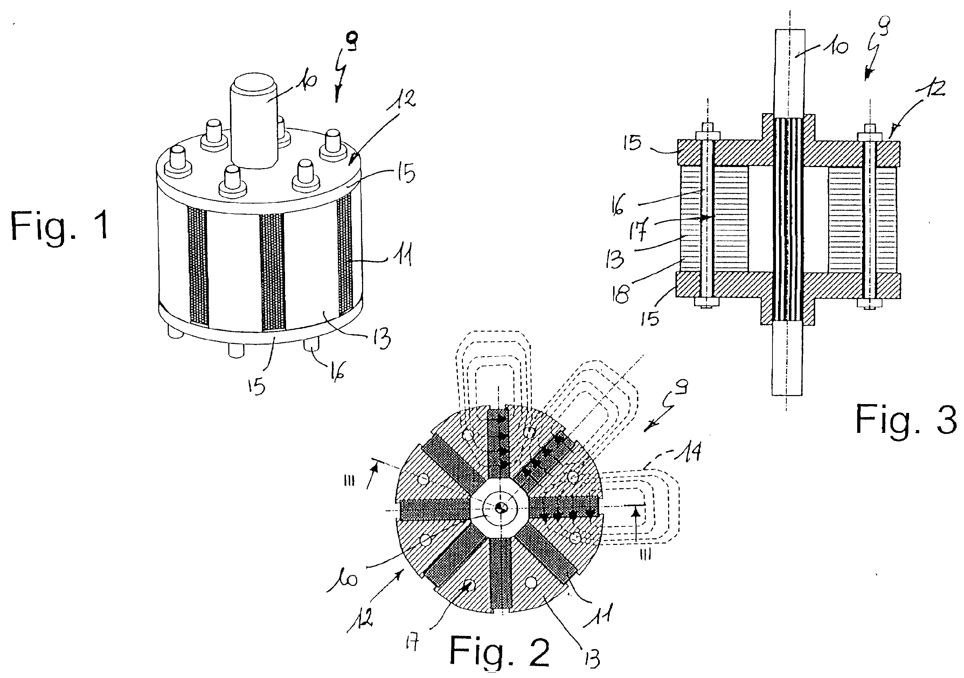

Electric motors of known type include an internal rotor 9 and an external stator (not shown) coaxial to the rotor 9 and provided with windings on one or more phases, as illustrated in figures 1-3. More in particular, the rotor 9 includes a driving shaft 10, a plurality of permanent magnets 11 placed around the driving shaft 10 itself, and an assembly structure 12 assembling the magnets 11 between them and with the driving shaft 10 in order to transmit the torque to the shaft 10 itself.

The assembly structure 12 includes a plurality of sectors 13 of ferromagnetic material, placed between the magnets 11 in order to close the path 14 of the magnetic flow, two flanges 15 axially splined to the shaft 10 on the opposite sides of the sectors 13 themselves, and a tie rod 16 for each sector 13. A part of each tie rod 16 is located inside a respective hole 17 passing through the respective sector 13 and, together with the tie rods 16 of the other sectors 13, it packet-closes both the two flanges 15 and the respective pile of laminations 18 which are basically triangular in shape and define each sector 13.

Due to the high angular speeds reached by the electric motors described above, both the flanges and the tie rods must be made of metal material in order to stand centrifugal acceleration and prevent, at the same time, the permanent magnets to be expelled radially.

Electric motors of the type described above are reliable and mechanically resistant, yet present some inconveniences in what concerns their magnetic characteristics and their cost.

In fact, despite the fact that the flanges are made of nonmagnetic material, they remain conductive elements which, due to the variations in the magnetic flow entering the rotor, generate respective short circuit turns. More in particular, each turn gets closed through two adjacent sectors and through the two flanges and opposes the incoming magnetic flow thus reducing the efficiency to the electric motor and increasing the temperature of the motor itself.

In order to solve the drawback represented by the short circuit turns, insulating elements placed between the flanges and the sectors, as well as between the sectors themselves and the tie rods, have been recently introduced in the electric motors of the type described above.

Unfortunately, said introduction on the one hand has made the assembly of the motor more complex and on the other hand has reduced the final accuracy in the assembly.

It is an object of the present invention to provide a permanent-magnet electric motor that is simple and not expensive to be realised and at the same time allows both the complete elimination of the short circuit turns and the achievement of very high final assembly accuracy.

According to the present invention it is provided a permanent magnet electric motor including a driving shaft, a plurality of permanent magnets placed around the driving shaft itself, and assembly means angle-coupled to the driving shaft in order to assemble the magnets between them and with the driving motor itself, the assembly means including a plurality of sectors made of ferromagnetic material placed between the permanent magnets, two flanges axially located on the opposite sides of the sectors themselves and, a respective pin for each sector located through the sector itself and inside respective holes made in said two flanges; the motor being characterised in that the assembly structure includes an insulating portion made of electric insulating material, each flange being part of said insulating portion and presenting an internal support made of metal material and presenting said holes.

In the following the invention will be described with reference to the appended drawings, provided as non-restrictive embodiment, in which:
- figure 1 is a perspective view of a rotor of an electric motor for electric household appliances of the known type;
- figure 2 is an axial section view of the rotor in figure 1;
- figure 3 is a section along line III-III in figure 2;

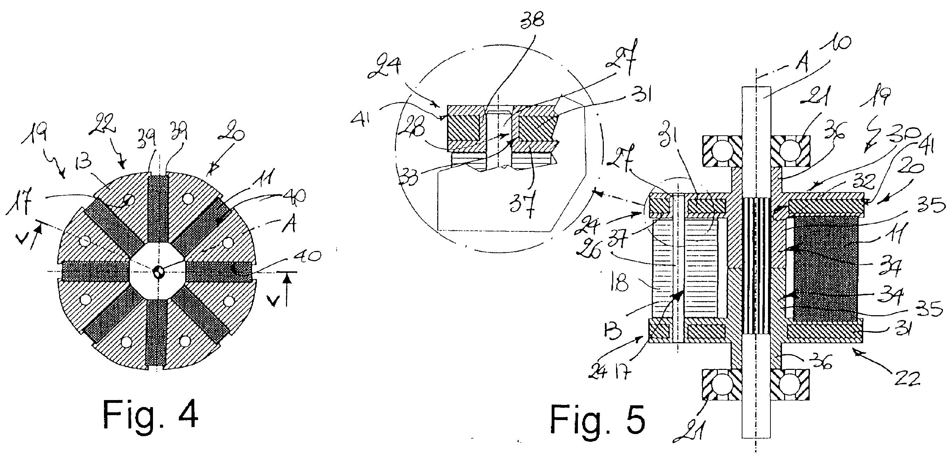

- figure 4 is an axial section view, parts of which have been removed for clarity sake, of a first preferred embodiment of an electric motor according to the present invention;
- figure 5 is a section along line V-V in figure 4;
- figure 6 is a section view, similar to that of figure 5, of a second preferred embodiment of the electric motor of the present invention;
- figure 7, in which there are enlarged section views and some parts have been removed for clarity sake, shows an alternative embodiment of a detail in figure 5; and
- figure 8, in which there are enlarged section views and some parts have been removed for clarity sake, shows an additional alternative embodiment of a detail in figure 5. With initial reference to figures 4 and 5, and using the same reference numbers to indicate parts which are identical or similar to those already in the introductory part of the description, reference number 19 indicates an overall permanent-magnet electric motor for electric household appliances.

The motor 19 includes an external stator (already known and shown) presenting windings on one or more phases, and an internal rotor 20, adapted to rotate around an axis of rotation A, and rotatably supported by a frame (not shown) by means of the placing of a pair of bearings 21 located on the opposite sides of the rotor 20 itself.

The rotor 20 includes a driving shaft 10 located along the axis A, a plurality of permanent magnets 11 placed around the axis A itself and an assembly structure 22, assembling the magnets 11 between them and with the driving shaft 10 in order to transmit the torque to the shaft 10 itself.

The assembly structure 22 includes a plurality of sectors 13 of ferromagnetic material placed between the magnets 11 in order to close the magnetic flow, two flanges 24 axially mounted on the shaft 10 on different sides of the sectors 13 themselves, and, a respective pin 26 for each sector 13, said pin being parallel to the axis A, and placed partially inside of a respective through hole 17 made in the relative sector 13. The opposite ends of each pin 26 are engaged with the respective through holes 28 made in the flanges 24.

As a difference to what has been described in the introduction, the structure 22 includes an insulating portion 30, made of plastic material or of a material which is anyway insulating from the electrical point of view, is possibly made by means of co-moulding with the components of the rotor 20 and is angle coupled to the driving shaft 10.

Each flange 24 is basically made of insulating material, and presents an internal support completely covered by the insulating material itself so that it is insulated electrically from both the pins 27 and the sectors 13. In particular, each support 31 is adapted to stand the centrifugal forces tending to disarrange the rotor 20 and is defined by means of a metal ring (for example an aluminium ring, a brass ring, etc.) presenting a central hole 32 engaged with the shaft 10, and provided with a plurality of holes 33 located around the hole 32, each one of these holes being engaged with a respective end 27 of the pins 26.

Each flange 24 includes a bush 34 completely made of the already mentioned insulating material and angle coupled to the shaft 10. Besides, the bush 34 fills up completely the central hole 32 of the respective support 31, and, starting from the support 31 itself, includes an internal cylindrical portion 35 axially extending towards the inner part of the structure 22, and an external cylindrical portion 36 axially extending towards the external part of the structure 22 itself.

The cylindrical portion 35 of a flange 24 is rabbeted against the cylindrical portion of the other flange 24, while the portions 36 define two shoulders for the bearings 21, that is, define an axial dimension for the external overall dimensions of the structure 22.

In addition, each flange 24 includes a respective separation disk 37, which is completely made of insulating material, is placed transversal to the axis A, and is located between the respective support 31 and the sectors 13 in order to insulate electrically the support 31 itself from the sectors 13 themselves.

Besides, each flange 24 includes, for each hole 33, a respective insulating jacket 38, which is placed inside the respective hole 33 in order to define the hole 28, and is located between the end 27 of the respective pin 26 and the support 31. More in particular, each end 27 is coupled with negative allowance to the respective hole 28 and is placed completely inside the respective jacket 38 to which it is adapted to transmit only the pressures which do not compromise the structure of the jacket 38 itself even at high rotation speeds of the rotor 20.

The assembly of the rotor 20 is very simple and takes place in basically four main steps which, for example, can be the following:
- a first step in which the flanges 24 and the bushes 34 are made by means of co-moulding of the support 31;
- a second step in which the sectors 13 are assembled to one of the two flanges 24 by means of a basically forced insertion of the respective ends 27 inside the holes 28;
- a third step in which the magnets 11 are assembled to the sectors 13; and
- a fourth step in which the second flange 24 is assembled and the shaft 10 in inserted into the newly created sector-magnets-flanges arrangement.

During the first step the holes 28 are made, the precise making and positioning of which depend basically from the precision of the mould that is used and not by the precise making of the holes 33 in the structures 31. This means not only less expensive surface finishing of the supports 31 themselves but also the achievement of basically defect-free flanges 24 and bushes 34.

During the third step, the magnets 11, basically parallelepiped in shape, are axially inserted between the two adjacent sectors 13 which are instead delimited by two radial flat surfaces 40 and which, at their external periphery, are provided with two longitudinal teeth 39 cantilever located in the respective wall 40 adapted to prevent the magnets 11 themselves from being expelled radially by the centrifugal force.

The presence on each flange 24 of a respective annular window 41 facing towards the external part of the rotor 20, and engaged into the respective support 31, allows the rotor 20 to be balanced by means of the simple removal of material directly from the support 31 itself.

Besides, the axial size of the external overall dimensions of the structure 22 presents a well defined tolerance and can serve as fixed reference for the installation of the rotor 20, since possible imperfections in shape or dimensions of the support 31 are compensated by the plastic material in the co-moulding step.

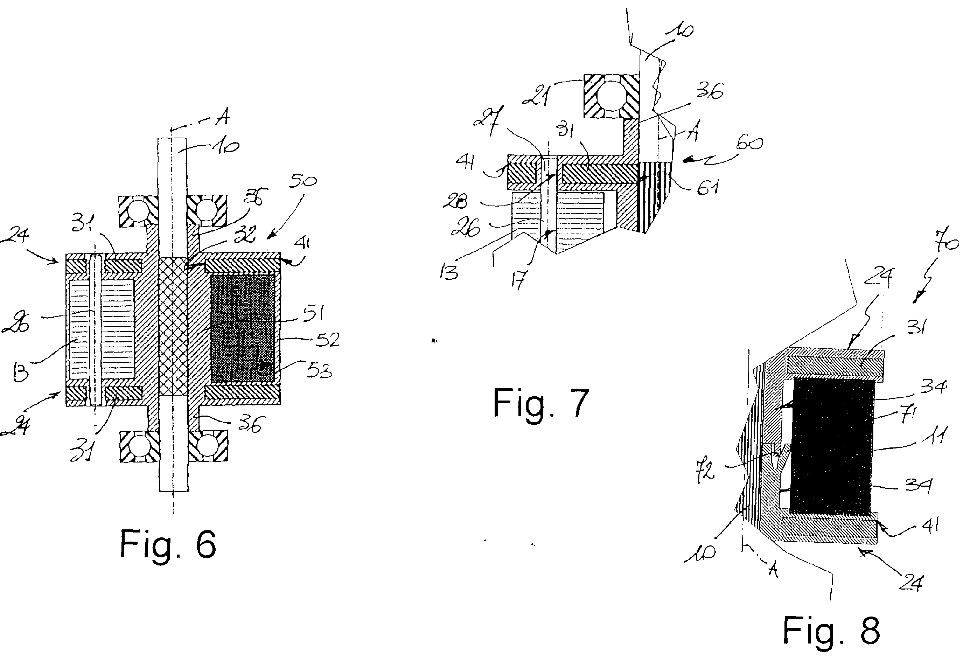

The embodiment shown in figure 6 refers to a motor 60 similar to the motor 19, from which the motor 50 differs firstly because the assembly structure 22 is a monolithic structure defined by a single block made by means of co-moulding said two sectors 13 and permanents magnets 11 too and, secondly, because the two internal portions 35 of the bushes 34 are single pieces and define a single bush 51.

The bush 51 is angle coupled to the driving shaft 10, and the structure presents also an external cylinder 52 defining, together with the bush 51 itself, a cylindrical seat 53 for the permanent magnets 11 and the sectors 13.

In this way an almost totally smooth external surface of the motor 50 itself is achieved, the advantage consisting in that the aerodynamic noise at high rotation speeds is reduced to a minimum.

The embodiment shown in figure 7 refers to a motor 60 similar to motor 19 or motor 50, from which the motor 60 differs because each flange 24 presents an annular window 61 which faces directly the driving shaft 10, and is engaged to the respective structure 31, which is angle coupled to the driving shaft itself in order to transmit the torque of the motor.

In this way the bushes 34 or bush 51 do not take part any longer in the transmission of the torque which is instead totally and directly transmitted from the structures 31, which, being made of metal material, present even better characteristics.

The embodiment shown in figure 8 refers to a motor 70 similar to motor 19, from which the motor 70 differs because one of the two bushes 34 presents a number of elastic tongues 71 equal to the number of the magnets 11, while the other one of the two bushes 34 presents a number of basically rigid striker plates 72 equal to the number of the tongues 71.

Each striker plate 72 extends parallely to the axis A and, during the assembly of the motor 70, is inserted below a respective tongue 71 causing the lifting, in a radial direction, of the tongue 71 itself which, by getting located basically against the respective magnet 11, acts on the internal part of the magnet 11 itself and pushes it keeping it pressed against the respective pair of teeth 39.

In this way the magnets 11 are pre-charged thus ensuring both their better positioning and their locking during the operation of motor 70 so that motor 70 itself produces less noise.

It is to be understood that the invention is not limited to the embodiments here described and shown, being them presented only as examples of embodiments of the electric motor 19 for electric household appliances, which can be modified in their shape and arrangement of parts as well as in their construction and assembly details. Besides, the solutions suggested for each embodiment can also be adopted together with or separately from different embodiments.

## Claims

1. A permanent-magnet electric motor (19,50,60,70) comprising a driving shaft (10), a plurality of permanent magnets (11) located around the driving shaft (10) itself and assembly means (12) being angle-coupled to the driving shaft (10) in order to assemble the magnets (11) between them an with the driving shaft (10) itself, the assembly means including a plurality of sectors (13) of ferromagnetic material placed between the permanent magnets (11), two flanges (24) axially located on the opposite sides of the sectors (13) themselves, each sector (13) being provided with a respective metal support (31) and a pin (26) placed through the sector (13) itself and inside the respective holes (28) made into the two flanges (24); the motor being characterised in that said assembly means (22) include an insulating portion, which is made of electrically insulating material, each flange (24) being part of said insulating portion and presenting an internal support (31) made of metal material and presenting said holes (28).

2. A motor as claimed in claim 1, characterised in that said insulating portion includes, for each hole (28) of each flange (24) a respective insulating jacket (38) placed between each pin (26) and said internal supports (31).

3. A motor as claimed in claim 2, characterised in that said pins (36) are coupled with negative allowance inside said jackets (38) and present their respective opposite end portions (27) entirely placed inside the jackets (38) themselves.

4. A motor as claimed in claim 1, 2, 3, characterised in that said insulating portion includes, for each of said internal supports (31), a respective separation disk (37) placed transversally to said shaft (10) and located between the supports (31) and said sectors (13).

5. A motor as claimed in any of the previous claims, characterised in that said insulating portion is made by means of co-moulding of at least said supports (31) together with said electrically insulating material.

6. A motor as claimed in claim 5, characterised in that each one of said sectors (13) includes a plurality of laminations (18) piled together, said insulating portion including two shoulders (36) located externally to said two flanges (24) in order to define an axial size of the external overall dimensions of the assembly means (22) adapted to serve as fixed reference for the installation of said motor.

7. A motor as claimed in claim 5 or 6, characterised in that said insulating portion is a monolithic portion defined by a single block made by means of co-moulding said sectors (13) and said permanent magnets (11) too.

8. A motor as claimed in claim 7, characterised in that said insulating portion includes a bush (51) angle coupled to said driving shaft (10), and an external cylinder (52) defining, together with the bush (51) itself, a cylindrical seat (53) for the permanent magnets (11) and the sectors (13).

9. A motor as claimed in claim 5 or 6, characterised in that each one of said flanges (24) includes a respective bush (34) angle coupled to said driving shaft (10), and rabbeted against the bush (34) of the other flange (24).

10. A motor as claimed in claim 9, characterised in that it includes elastic means (71) for pre-charging, placed basically in contact on said magnets (11) in order to push the magnets (11) themselves radially outwards.

11. A motor as claimed in claim 10, characterised in that said elastic means (71) for pre-charging, include, for each magnet (11) a flexible elastic element (71) that can be bent radially outwards, and a rigid striker element (71) engaged to the elastic element (71) in order to determine the bending of the elastic element (71) itself.

12. A motor as claimed in claim 11, characterised in that said elastic elements (71) are integral to one of said two bushes (24) and the rigid elements (72) are integral to the other one of said two bushes (24) and interfere axially with the relative elastic elements (71).

13. A motor as claimed in claim 5, characterised in that each one of said flanges (24) includes a respective bush mounted free on the driving shaft (10), and presenting an annular window (61) directly facing the driving shaft (10) itself; the support (31) of each flange (24) being arranged through the respective annular window (612) and angle coupled to the driving shaft (10).

14. A motor as claimed in claim 1, characterised in that each one of said flanges (24) presents an annular window (41) facing towards the external part of the rotor and engaged to the respective support (31) in order to allow to balance the rotor itself by removing material directly from the support (31) itself.
